# EUROPEAN PATENT APPLICATION

(11) **EP 4 545 818 A1**
(43) Date of publication of application: **30.04.2025**
(21) Application number: 23205887.5
(22) Date of filing: 25.10.2023
(51) Int. Cl.: F16D 55/226, F16D 65/097, F16D 65/62

(54) **A WHEEL BRAKE ARRANGEMENT**

(71) Applicant: VOLVO TRUCK CORPORATION, 405 08 Göteborg (SE)
(72) Inventor: MANDAL, Goutam, 732121 MALDA WEST BENGAL (IN); SHANKAR, Naveen, 562114 BANGALORE (IN); KUMAR, Amit, 844101 HAJIPUR (IN)
(74) Representative: Kransell & Wennborg KB

(57) **Abstract**

The disclosure relates to wheel brake arrangement comprising a first brake pad module comprising a first brake pad, and a second brake pad module comprising a second brake pad, a spring arrangement comprising at least one coil spring, a first rod comprising a first end portion attached to a first end of the at least one coil spring and a second end portion operatively connected to the first brake pad module, and a locking arrangement attached to a stationary portion of the wheel brake arrangement, the locking arrangement comprising a first locking member slidable along a surface of the first rod upon moving the first and second brake pads toward each other, and a stop element configured to lock the first locking element to the surface of the first rod upon moving the first brake pad a predetermined distance away from the second brake pad.

## Description

### TECHNICAL FIELD

The disclosure relates generally to brakes. In particular aspects, the disclosure relates to a wheel brake arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles, such as e.g. vehicles in the form trucks, always have a high demand on the wheel brakes. These demands relate in particular to the braking capability of the wheel brake as they need to function properly in order to reduce vehicle speed properly.

Typically, the wheel brake comprises a brake disc connected to a wheel hub, which in turn is connected to a wheel of the vehicle. The wheel brake further comprises brake pads which are arranged to provide a brake action against the brake disc, i.e. clamp against the brake disc, such that a rotation speed of the wheel is reduced. The brake disc will thus slip against the brake pads until the wheel has stopped its motion. This creates frictional heat in the brake disc which needs to be taken care of. The brake pads are in turn connected to a carrier arranged to support the brake pad and keep it in its correct position.

However, there is a risk that the brake pads are not sufficiently removed from the brake disc after a braking event, which may cause drag losses increasing the fuel consumption, and increased wear of the brake pads. There is thus a desire to improve the brake disc arrangement for e.g. increasing the operational lifetime of its components as well as reducing the fuel consumption generated by the drag losses.

### SUMMARY

According to a first aspect of the disclosure, there is provided a wheel brake arrangement for a wheel of a vehicle, the wheel brake arrangement comprising a first brake pad module comprising a first brake pad, and a second brake pad module comprising a second brake pad, the first and second brake pad modules being axially movable relative to each other, a spring arrangement comprising at least one coil spring, a first rod comprising a first end portion attached to a first end of the at least one coil spring and a second end portion operatively connected to the first brake pad module, wherein a second end of the at least one coil spring is operatively connected to the second brake pad module, and a locking arrangement attached to a stationary portion of the wheel brake arrangement, the locking arrangement comprising a first locking member slidable along a surface of the first rod upon moving the first and second brake pads toward each other, and a stop element configured to lock the first locking element to the surface of the first rod upon moving the first brake pad a predetermined distance away from the second brake pad.

The first aspect of the disclosure may seek to reduce the risk of the brake pad maintaining engagement with a brake disc after a braking event. A technical benefit may include that the operational lifetime of the brake pad is increased. Also, a positive brake pad disengagement from the brake disc will have a positive impact on the fuel economy of the vehicle as it will reduce the inertia. In addition, by using the above described locking arrangement the disclosure may also ensure that the first brake pad will maintain a predetermined distance from a brake disc after the brake event even when the first brake pad has been worn due to usage. A technical benefit may include that a delay in the brake application can be more or less avoided. The locking mechanism may thus compensate for brake pad wear and enable rapid braking action.

The above definition "operatively connected to" should in the following and throughout be construed in such a manner that one component can be connected to another component via another element. For example, and according to the above, the second end portion of the first rod may be connected to the first brake pad module via another component. Examples will be given below in relation to at least one example.

Optionally in some examples, including in at least one preferred example, wherein the surface of the first rod is a serrated surface, the first locking element being engaged with a sawtooth of the serrated surface to lock the first locking element to the serrated surface when the first brake pad has moved the predetermined distance away from the second brake pad. A technical benefit may include that the locking element slides along the serrated surface when the first and second brake pad modules move away from each other, and when the first brake pad module has moved the predetermined distance, the locking element rapidly engages with the sawtooth of the serrated surface.

Optionally in some examples, including in at least one preferred example, wherein the first locking element is a locking cam rotatably attached to the stationary portion of the wheel brake arrangement. A technical benefit may include that the locking cam is particularly suitable for engagement with a sawtooth of the serrated surface to obtain a secure locking functionality of the first brake pad module.

Optionally in some examples, including in at least one preferred example, wherein the stop element is arranged in abutment with a first portion of the locking cam when the first brake pad has moved the predetermined distance away from the second brake pad to fixate a second portion of the locking cam to the sawtooth of the serrated surface. A technical benefit may include that a secure mechanical stop for the movement of the first brake pad module is obtained.

Optionally in some examples, including in at least one preferred example, wherein the stop element is a stop pin.

Optionally in some examples, including in at least one preferred example, wherein the first rod and the at least one coil spring are arranged coaxially with each other. A technical benefit may include that a compact arrangement for obtaining the return motion of the brake pad module as well as to lock the brake pad module at the desired position relative to a brake disc.

Optionally in some examples, including in at least one preferred example, wherein the first brake pad module further comprises a radially extending plate member, wherein the second end portion of the first rod is attached to the radially extending plate member.

Optionally in some examples, including in at least one preferred example, wherein the first brake pad module further comprises a first backing plate supporting the first brake pad, wherein the radially extending plate member is attached to the first backing plate. A technical benefit may include that that the spring force from the coil spring is exerted to the backing plate to thereby uniformly force the first brake pad module in a direction away from the second brake pad module.

Optionally in some examples, including in at least one preferred example, wherein spring arrangement comprises a second rod, the second rod comprising a first end portion attached to the second end of the at least one coil spring, and a second end portion operatively connected to the second brake pad module.

Optionally in some examples, including in at least one preferred example, wherein the locking arrangement further comprises a second locking member slidable along a surface of the second rod upon moving the first and second brake pads toward each other, and a second stop element configured to lock the second locking element to the surface of the second rod upon moving the first and second brake pads the predetermined distance away from each other. A technical benefit may include that also the second brake pad module can be arranged at a predetermined distance from the brake disc after a braking event. Thus, it can be ensured that also the second brake pad will maintain a predetermined distance from the brake disc after the brake event even when the second brake pad has been worn due to usage.

Optionally in some examples, including in at least one preferred example, wherein the first rod, the second rod and the at least one coil spring are arranged coaxially with each other. A technical benefit may include that a compact wheel brake arrangement is provided which includes a low number of components for obtaining the above described technical advantages.

Optionally in some examples, including in at least one preferred example, wherein the at least one coil spring comprises a first coil spring and a second coil spring. A technical advantage may include that the return force of the first and second brake pad modules can be improved.

Optionally in some examples, including in at least one preferred example, wherein the first coil spring is attached to the first rod and the second coil spring is attached to the second rod.

Optionally in some examples, including in at least one preferred example, wherein the spring arrangement further comprises a mounting bracket arranged between the first and second coil springs. Hereby, each of the first and second coil springs exerts a pressure against the mounting bracket when forcing the first and second brake pad modules in the direction away from each other.

Optionally in some examples, including in at least one preferred example, further comprising a stationary retainer bar, wherein the stationary portion of the wheel brake arrangement is arranged on a surface of the stationary retainer bar.

Optionally in some examples, including in at least one preferred example, wherein the at least one coil spring is arranged in a spring housing attached to the stationary retainer bar. A technical benefit may include that the at least one coil spring is well protected from damage, etc.

Optionally in some examples, including in at least one preferred example, wherein the wheel brake arrangement further comprises a rotatable brake disc arranged axially between the first and second brake pads.

Optionally in some examples, including in at least one preferred example, wherein the first and second brake pad modules are movable towards and away from the rotatable brake disc.

According to a second aspect, there is provided a vehicle comprising a wheel brake arrangement of any one of the examples described above in relation to the first aspect. Effects and features of the second aspect are largely analogous to those described above in relation to the first aspect.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a wheel brake arrangement according to an example, and
Figs. 3 - 6 are detailed exemplary illustrations of a spring arrangement and a locking arrangement of the wheel brake arrangement according to examples.

### DETAILED DESCRIPTION

The detailed description set forth below provides information and examples of the disclosed technology with sufficient detail to enable those skilled in the art to practice the disclosure.

The disclosure described in the following may seek to reduce the risk of drag losses caused by brake pads not being properly released from a brake disc after a braking event. In addition, the disclosure aims to mitigate the risk that the brake pad is arranged to far away from the brake disc in a released state when the brake pad is worn due to usage. A technical benefit of the present disclosure described in the following may thus become that rapid engagement and secure disengagement of the brake pad to/from the brake disc can be obtained irrespective of the brake pad ware.

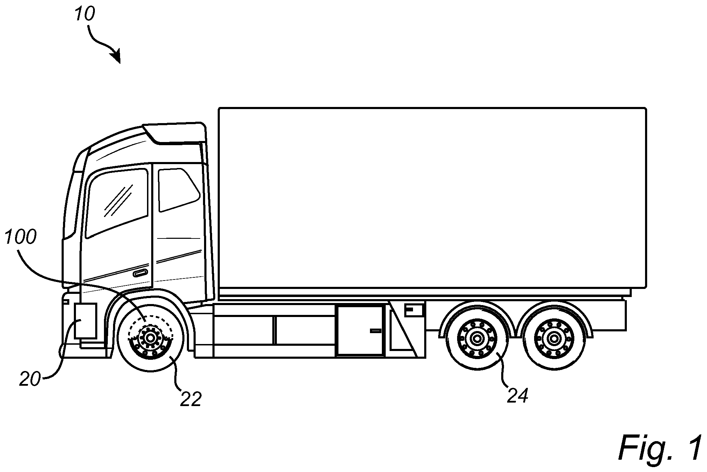

Turning to Fig. 1, which is an exemplary illustration of a vehicle 10 according to an example. The exemplified vehicle 10 is in the form of a truck. In Fig. 1, the vehicle 10 is depicted as comprising an engine 20, such as in the form of an electric traction motor for propelling the vehicle 10. The engine 20 may be connected to the foremost pair of rear wheels 24. Other alternatives are of course conceivable, such as connecting the engine to the front wheels 22 and/or to both the front pair of rear wheels 24 as well as to the front wheels 22, etc. Although Fig. 1 illustrates an electrically propelled vehicle 10, the vehicle 10 may also be propelled by an engine 20 in the form of an internal combustion engine (not shown), either alone or in combination with the electric traction motor. The latter example is also conventionally referred to as a hybrid vehicle.

Further, the vehicle 10 comprises a braking arrangement 100, illustrated in the form of a service brake. In Fig. 1, the braking arrangement 100 is only depicted as arranged on the front wheels 22 but it should be readily understood that the braking arrangement 100 may be arranged on further wheels than the front wheels 22, such as for each of the wheels of the vehicle 10.

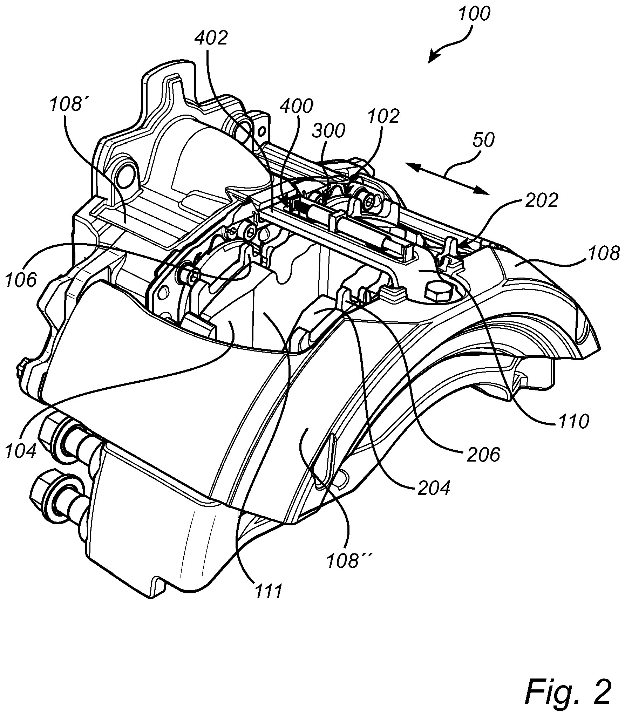

In order to describe the braking arrangement 100 in further detail, reference is now made to Fig. 2, which is an exemplary illustration of a wheel brake arrangement according to an example. The wheel brake arrangement 100 exemplified in Fig. 2 comprises a first brake pad module 102 and a second brake pad module 202, wherein the first brake pad module 102 comprises a first brake pad 104, while the second brake pad module 202 comprises a second brake pad 204. The first 102 and second 202 brake pad modules are axially 50 movable relative to each other. Further, the first brake pad module 102 comprises a first backing plate 106 arranged as a support for the first brake pad 104. In a similar vein, the second brake pad module 202 comprises a second backing plate 206 arranged as a support for the second brake pad 204. Further, although not depicted in Fig. 2, a rotatable brake disc is arranged between the first 102 and second 202 brake pad modules. The brake disc is connected to a wheel (e.g. 22 in Fig. 1) of the vehicle 10 whereby the wheel brake arrangement 100 is arranged to controllably reduce or control the rotational speed of the wheel 22 during operation of the vehicle 10.

Moreover, the exemplified wheel brake arrangement 100 further comprises a caliper 108 at least partially housing the brake pad modules 102, 202, as well as the brake disc 106. As can be seen, the caliper 108 comprises a first caliper part 108' and a second caliper part 108" which are connected to each other. Also, the first 108' and second 108" caliper parts form an opening 111 of the caliper 108. By means of the opening 111, components of the brake pad arrangement 100 are accessible whereby maintenance thereof is simplified. The caliper 108 is a stationary portion 402 of the wheel brake arrangement 100.

Furthermore, the wheel brake arrangement 100 comprises a further stationary portion 402 in the form of a retainer bar 110. The retainer bar 110 is preferably connected between the first 108' and second 108" caliper parts. In detail, the retainer bar 110 is connected to the second caliper part 108" by means of a screw connection and extends axially across each of the first 102 and second 202 brake pad modules, as well as the brake disc, thus forming a bridge radially above the opening 111.

Moreover, the wheel brake arrangement 100 further comprises a spring arrangement 300. The spring arrangement 300 is configured to force at least the first brake pad 104 axially away from the second brake pad 204 upon releasing the brake subsequent to a braking event/braking operation. In yet further detail, and according to an example, the spring arrangement 300 is configured to force both the first 104 and second 204 brake pads away from the brake disc subsequent to the braking event. The wheel brake arrangement 100 further comprises a locking arrangement 400 configured to fixate the first brake pad module 102 at a predetermined distance away from the second brake pad module 202 subsequent to the braking event.

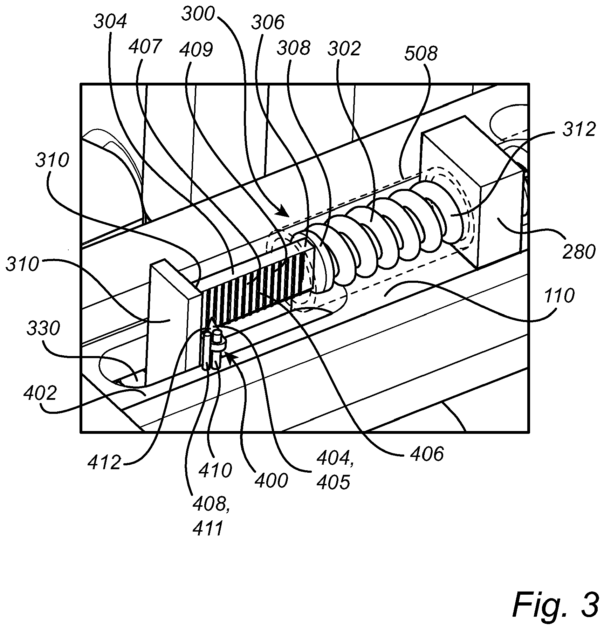

In order to describe the spring arrangement 300, as well as a locking arrangement 400 in further detail, reference is made to Fig. 3 which is a detailed exemplary illustration of the spring arrangement 300 and the locking arrangement 400 of the wheel brake arrangement 100 according to an example. As can be seen in Fig. 3, the spring arrangement 300 comprises at least one coil spring 302, a first rod 304 comprising a first end portion 306 attached to a first end 308 of the at least one coil spring. The first rod 304 also comprises a second end portion 310 operatively connected to the first brake pad module (102 in Fig. 2). A second end 312 of the at least one coil spring 302 is operatively connected to the second brake pad module (202 in Fig. 2). In the exemplified illustration of Fig. 3, the second end 312 of the at least one coil spring 302 is operatively connected to the second brake pad module via other components, such as via at least a mounting bracket 280 described in further detail below.

Furthermore, the locking arrangement 400 is attached to the stationary portion 402 of the wheel brake arrangement, such as preferably the above described retainer bar 110. The locking arrangement 400 comprising a first locking member 404 which is slidable along a surface 406 of the first rod upon moving the first 104 and second 204 brake pads toward each other. The locking arrangement 400 also comprises a stop element 408. The stop element 408 is configured to lock the first locking element 404 to the surface 406 of the first rod 304 upon moving the first brake pad 104 a predetermined distance away from the second brake pad 204.

In further detail, and according to an example, the first second end portion 310 is preferably connected to a first radially extending plate member 320, which in turn is connected to the first brake pad module 102. The first radially extending plate member 320 is extending through an opening 330 of the retainer bar 110 to be able to move along with the first brake pad module 102 upon braking and releasing the brake. In yet further detail, the first radially extending plate member 320 is preferably attached to the first backing plate 106.

Moreover, and as exemplified in Fig. 3, the surface 406 of the first rod 304 is preferably a serrated surface 407. The serrated surface 407 comprises a plurality of saw teeth 409. The first locking element 406 is slidable along the serrated surface 407, and engaged with a sawtooth, i.e. one of the plurality of saw teeth 409 of the serrated surface 407 when the first brake pad 104 has moved the predetermined distance away from the second brake pad 204 upon releasing the brake, i.e. after the braking event. Hereby, the first locking element 404 is locked to the serrated surface 407. In yet further detail, when the first brake pad 104 has moved the predetermined distance away from the second brake pad 204, the first locking element 404 hooks into one of the plurality of saw teeth 409 to maintain the first brake pad at the predetermined distance. Thus, even when the first brake pad 104 is worn, the surface of the first brake pad 104 facing the second brake pad 204 will be arranged at the same predetermined distance form the second brake pad 204 as for a new and unused first brake pad. Accordingly, the surfaces of the first 104 and second 204 brake pads facing each other will remain at substantially the same distance from each other after a braking event irrespective of wear, and as a consequence, will be arranged at the same distance from the brake disc after the braking event. In addition, the first rod and the at least one coil spring are arranged coaxially with each other.

The locking element 404 is preferably, and as indicated in Fig. 3, a rotatable locking cam 405. Preferably, the locking cam 405 is rotatably attached to the stationary portion 402 of the wheel brake arrangement 100. The rotatable locking cam 405 is in the exemplified illustration rotatably connected to a pin 410, which pin 410 in turn is fixated to the retainer bar 110. The rotatable locking cam 405 preferably comprises a nose portion arranged to slide along the serrated surface 407 of the first rod 304.

Moreover, the stop element 408 is preferably a stop pin 411 which is attached to the retainer bar 110. When the rotatable locking cam 405 rotates, it will eventually arrive at the position of the stop element 408 which will prevent the rotatable locking cam 405 to rotate further, thereby locking the rotatable locking cam 405. The rotatable locking cam 405 will hook into one of the plurality of saw teeth to thereby fixate the first rod 304 and in turn also lock the first brake pad 104 at the predetermined distance from the second brake pad 204. In yet further detail, the stop element 408 is preferably arranged in abutment with a first portion 412, i.e. a first surface of the locking cam 405 when the first brake pad 104 has moved the predetermined distance away from the second brake pad to fixate a second portion, i.e. the nose portion, of the locking cam 405 to the one of the plurality of saw teeth of the serrated surface 407.

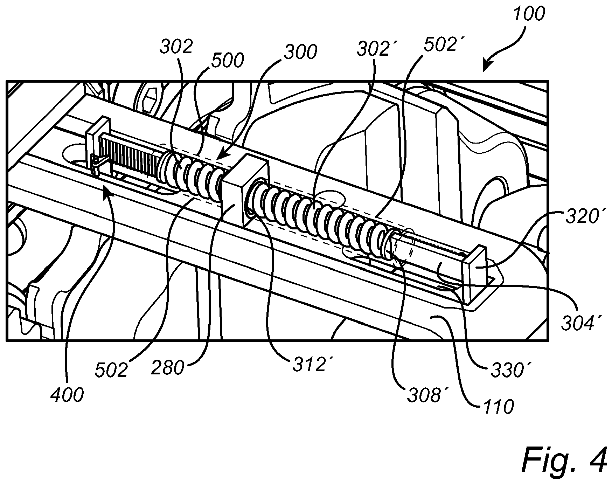

Reference is now made to Figs. 4-6 which are detailed exemplary illustrations of a spring arrangement 300 and a locking arrangement 400 of the wheel brake arrangement 100 according to examples. The spring arrangement 300 comprises a second rod 304' in addition to the first rod 304. The second rod 304' comprises a first end portion 308' attached to the at least one coil spring 302. In further detail, the first end portion 308' of the second rod 304'is attached to the second end of the at least one coil spring 302. The second rod 304 also comprises a second end 310' operatively connected to the second brake pad module 202. Preferably, and as depicted in Figs. 4-6, the second end 310' of the second rod 304 is preferably connected to a second radially extending plate member 320', which in turn is connected to the second brake pad module 202. The second radially extending plate member 320' is extending through a second opening 330' of the retainer bar 110 to be able to move along with the second brake pad module 202 upon braking and releasing the brake. In yet further detail, the second radially extending plate member 320' is preferably attached to the second backing plate 106.

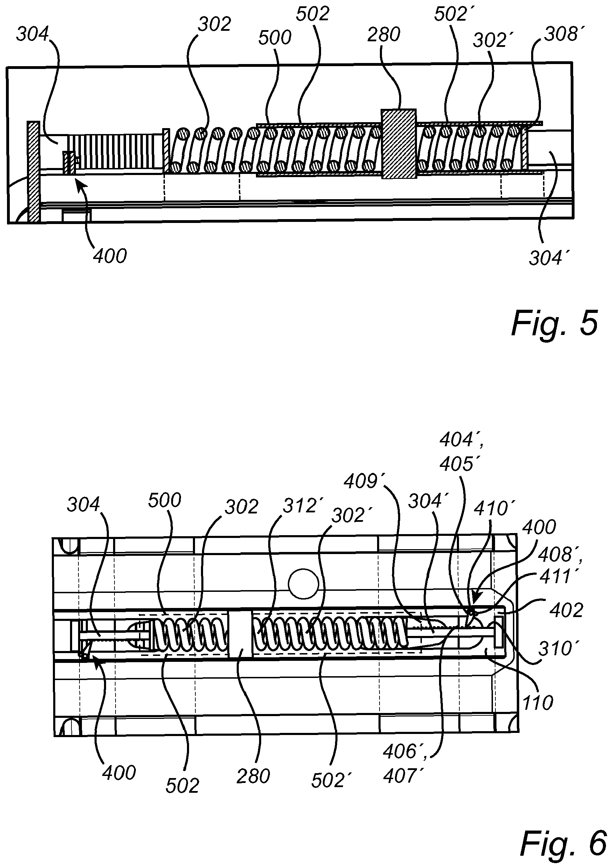

Further, and as is best illustrated in Fig. 6, the locking arrangement 400 also comprises a second locking member 404' which is slidable along a surface 406' of the second rod 304' upon moving the first and second brake pads toward each other. The locking arrangement 400 further comprises a second stop element 408' configured to lock the second locking element 404' to the surface 406' of the second rod 304' upon moving the first 104 and second 204 brake pads the predetermined distance away from each other.

Preferably, the surface 406' of the second rod 304' is, in a similar vein as the surface 406 of the first rod 304, a serrated surface 407', also referred to as the second serrated surface 407'. The second serrated surface 407' comprises a plurality of saw teeth 409'. The second locking element 404' is slidable along the second serrated surface 407', and engaged with a sawtooth, i.e. one of the plurality of saw teeth 409' of the second serrated surface 407' when the second brake pad 204 has moved the predetermined distance away from the first brake pad 104 upon releasing the brake, i.e. after the braking event. Hereby, the second locking element 404' is locked to the second serrated surface 407'. In yet further detail, when the second brake pad 204 has moved the predetermined distance away from the first brake pad 104, the second locking element 404' hooks into one of the plurality of saw teeth 409' to maintain the second brake pad at the predetermined distance. Thus, even when the second brake pad 204 is worn, the surface of the second brake pad 204 facing the first brake pad 104 will be arranged at the same predetermined distance form the first brake pad 104 as for a new and unused second brake pad. Accordingly, the surfaces of the first 104 and second 204 brake pads facing each other will remain at substantially the same distance from each other after a braking event irrespective of wear, and as a consequence, will be arranged at the same distance from the brake disc after the braking event. In addition, the first rod, second rod, and the at least one coil spring are arranged coaxially with each other.

Moreover, the locking arrangement 400 in Figs. 4-6 further comprises a second stop element 408' configured to lock the second locking element 404' to the surface of the second rod 304' upon moving the first 104 and second 204 brake pads the predetermined distance away from each other.

The second locking element 404' is preferably, in a similar vein as the first locking element 404, a rotatable locking cam 405', also in the following referred to as the second locking cam 405'. Preferably, the second locking cam 405' is rotatably attached to the stationary portion 402 of the wheel brake arrangement 100. The second rotatable locking cam 405' is in the exemplified illustration rotatably connected to a pin 410', also referred to as the second pin 410', which second pin 410' in turn is fixated to the retainer bar 110. The rotatable second locking cam 405' preferably comprises, in a similar vein as the locking cam for the first locking element, a nose portion arranged to slide along the second serrated surface 407' of the second rod 304'.

Furthermore, and also in a similar manner as the example depicted in Fig. 3, the second stop element 408' is preferably a second stop pin 411' which is attached to the retainer bar 110. When the rotatable second locking cam 405' rotates, it will eventually arrive at the position of the second stop element 408' which will prevent the rotatable second locking cam 405' to rotate further, thereby locking the rotatable second locking cam 405'. The rotatable second locking cam 405' will hook into one of the plurality of saw teeth to thereby fixate the second rod 304' and in turn also lock the second brake pad 204 at the predetermined distance from the first brake pad 104. In yet further detail, the second stop element 408' is preferably arranged in abutment with a first portion, i.e. a first surface of the second locking cam 405' when the second brake pad 204 has moved the predetermined distance away from the first brake pad to fixate a second portion, i.e. the nose portion, of the second locking cam 405' to the one of the plurality of saw teeth of the second serrated surface 407' .

Furthermore, and as exemplified in Figs. 4 - 6, the spring arrangement 300 may comprise a first coil spring 302 and a second coil spring 302'. Thus, the at least one coil spring may comprise a first 302 and second 302' coil spring. In further detail, the first coil spring 302 is attached to the first rod 304 and the second coil spring 302' is attached to the second rod 304'. In addition, a mounting bracket 280 is preferably arranged between the first 302 and second 302' coil springs. Thus, the first 302 and second 302' coil springs are connected to the mounting bracket 280. In yet further detail, the first rod 304 is arranged between the first brake pad module 102 and the first coil spring 302. The first coil spring 302 is arranged between the first rod 304 and the mounting bracket 280. In a similar vein, the second rod 304' is arranged between the second brake pad module 202 and the second coil spring 302'. The second coil spring 302' is arranged between the second rod 304' and the mounting bracket 280.

Moreover, and with reference to Figs. 3-6, the at least one coil spring 302 is arranged in a spring housing 500. In the example of Figs. 4 - 6, the spring housing 500 comprises a first spring housing 502 housing the first coil spring 302, and a second spring housing 502' housing the second coil spring 302'. The spring housing 500 is preferably attached to the mounting bracket 280.

### EXAMPLE LIST

Example 1. A wheel brake arrangement for a wheel of a vehicle, the wheel brake arrangement comprising a first brake pad module comprising a first brake pad, and a second brake pad module comprising a second brake pad, the first and second brake pad modules being axially movable relative to each other, a spring arrangement comprising at least one coil spring, a first rod comprising a first end portion attached to a first end of the at least one coil spring and a second end portion operatively connected to the first brake pad module, wherein a second end of the at least one coil spring is operatively connected to the second brake pad module, and a locking arrangement attached to a stationary portion of the wheel brake arrangement, the locking arrangement comprising a first locking member slidable along a surface of the first rod upon moving the first and second brake pads toward each other, and a stop element configured to lock the first locking element to the surface of the first rod upon moving the first brake pad a predetermined distance away from the second brake pad.

Example 2. The wheel brake arrangement of example 1, wherein the surface of the first rod is a serrated surface, the first locking element being engaged with a sawtooth of the serrated surface to lock the first locking element to the serrated surface when the first brake pad has moved the predetermined distance away from the second brake pad.

Example 3. The wheel brake arrangement of example 2, wherein the first locking element is a locking cam rotatably attached to the stationary portion of the wheel brake arrangement.

Example 4. The wheel brake arrangement of example 3, wherein the stop element is arranged in abutment with a first portion of the locking cam when the first brake pad has moved the predetermined distance away from the second brake pad to fixate a second portion of the locking cam to the sawtooth of the serrated surface.

Example 5. The wheel brake arrangement of any one of the preceding examples, wherein the stop element is a stop pin.

Example 6. The wheel brake arrangement of any one of the preceding examples, wherein the first rod and the at least one coil spring are arranged coaxially with each other.

Example 7. The wheel brake arrangement of any one of the preceding examples, wherein the first brake pad module further comprises a radially extending plate member, wherein the second end portion of the first rod is attached to the radially extending plate member.

Example 8. The wheel brake arrangement of example 7, wherein the first brake pad module further comprises a first backing plate supporting the first brake pad, wherein the radially extending plate member is attached to the first backing plate.

Example 9. The wheel brake arrangement of any one of the preceding examples, wherein spring arrangement comprises a second rod, the second rod comprising a first end portion attached to the second end of the at least one coil spring, and a second end portion operatively connected to the second brake pad module.

Example 10. The wheel brake arrangement of example 9, wherein the locking arrangement further comprises a second locking member slidable along a surface of the second rod upon moving the first and second brake pads toward each other, and a second stop element configured to lock the second locking element to the surface of the second rod upon moving the first and second brake pads the predetermined distance away from each other.

Example 11. The wheel brake arrangement of any one of examples 9 or 10, wherein the first rod, the second rod and the at least one coil spring are arranged coaxially with each other.

Example 12. The wheel brake arrangement of any one of the preceding examples, wherein the at least one coil spring comprises a first coil spring and a second coil spring.

Example 13. The wheel brake arrangement of example 12 when dependent on any one of examples 9 - 11, wherein the first coil spring is attached to the first rod and the second coil spring is attached to the second rod.

Example 14. The wheel brake arrangement of example 13, wherein the spring arrangement further comprises a mounting bracket arranged between the first and second coil springs.

Example 15. The wheel brake arrangement of any one of the preceding examples, further comprising a stationary retainer bar, wherein the stationary portion of the wheel brake arrangement is arranged on a surface of the stationary retainer bar.

Example 16. The wheel brake arrangement of example 15, wherein the at least one coil spring is arranged in a spring housing attached to the stationary retainer bar.

Example 17. The wheel brake arrangement of any one of the preceding examples, wherein the wheel brake arrangement further comprises a rotatable brake disc arranged axially between the first and second brake pads.

Example 18. The wheel brake arrangement of example 17, wherein the first and second brake pad modules are movable towards and away from the rotatable brake disc.

Example 19. A vehicle, comprising a wheel brake arrangement of any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A wheel brake arrangement (100) for a wheel of a vehicle, the wheel brake arrangement comprising:
- a first brake pad module (102) comprising a first brake pad (104), and a second brake pad module (202) comprising a second brake pad (204), the first and second brake pad modules being axially movable relative to each other,
- a spring arrangement (300) comprising at least one coil spring (302, 302'), a first rod (304) comprising a first end portion (306) attached to a first end (308) of the at least one coil spring and a second end portion (310) operatively connected to the first brake pad module, wherein a second end (312) of the at least one coil spring (302. 302') is operatively connected to the second brake pad module (202), and
- a locking arrangement (400) attached to a stationary portion (402) of the wheel brake arrangement, the locking arrangement comprising a first locking member (404) slidable along a surface (406) of the first rod upon moving the first and second brake pads toward each other, and a stop element (408) configured to lock the first locking element to the surface of the first rod upon moving the first brake pad a predetermined distance away from the second brake pad.

2. The wheel brake arrangement of claim 1, wherein the surface of the first rod is a serrated surface, the first locking element being engaged with a sawtooth of the serrated surface to lock the first locking element to the serrated surface when the first brake pad has moved the predetermined distance away from the second brake pad.

3. The wheel brake arrangement of claim 2, wherein the first locking element is a locking cam rotatably attached to the stationary portion of the wheel brake arrangement.

4. The wheel brake arrangement of claim 3, wherein the stop element is arranged in abutment with a first portion of the locking cam when the first brake pad has moved the predetermined distance away from the second brake pad to fixate a second portion of the locking cam to the sawtooth of the serrated surface.

5. The wheel brake arrangement of any one of the preceding claims, wherein the first rod and the at least one coil spring are arranged coaxially with each other.

6. The wheel brake arrangement of any one of the preceding claims, wherein the first brake pad module further comprises a radially extending plate member, wherein the second end portion of the first rod is attached to the radially extending plate member.

7. The wheel brake arrangement of any one of the preceding claims, wherein spring arrangement comprises a second rod, the second rod comprising a first end portion attached to the second end of the at least one coil spring, and a second end portion operatively connected to the second brake pad module.

8. The wheel brake arrangement of claim 7, wherein the locking arrangement further comprises a second locking member slidable along a surface of the second rod upon moving the first and second brake pads toward each other, and a second stop element configured to lock the second locking element to the surface of the second rod upon moving the first and second brake pads the predetermined distance away from each other.

9. The wheel brake arrangement of any one of claims 7 or 8, wherein the first rod, the second rod and the at least one coil spring are arranged coaxially with each other.

10. The wheel brake arrangement of any one of the preceding claims, wherein the at least one coil spring comprises a first coil spring and a second coil spring.

11. The wheel brake arrangement of claim 10 when dependent on any one of claims 7-9, wherein the first coil spring is attached to the first rod and the second coil spring is attached to the second rod.

12. The wheel brake arrangement of claim 11, wherein the spring arrangement further comprises a mounting bracket arranged between the first and second coil springs.

13. The wheel brake arrangement of any one of the preceding claims, further comprising a stationary retainer bar, wherein the stationary portion of the wheel brake arrangement is arranged on a surface of the stationary retainer bar.

14. The wheel brake arrangement of claim 13, wherein the at least one coil spring is arranged in a spring housing attached to the stationary retainer bar.

15. A vehicle, comprising a wheel brake arrangement of any one of the preceding claims.
